# EUROPÄISCHE PATENTSCHRIFT

(11) **EP 1 453 773 B1**
(45) Veröffentlichungstag und Bekanntmachung des Hinweises auf die Patenterteilung: **23.04.2008**
(21) Anmeldenummer: 02791816.8
(22) Anmeldetag: 12.12.2002
(51) Int. Cl.: C04B 35/52, C04B 35/573

(54) **VERFAHREN ZUR HERSTELLUNG EINES KOHLENSTOFF- BZW. KERAMIKBAUTEILS**
METHOD FOR THE PRODUCTION OF A CARBON OR CERAMIC COMPONENT
PROCEDE POUR FABRIQUER UN ELEMENT EN CARBONE OU EN CERAMIQUE

(30) Priorität: 12.12.2001 DE 10161108
(43) Veröffentlichungstag der Anmeldung: 08.09.2004
(73) Patentinhaber: Schunk Kohlenstofftechnik GmbH, 35452 Heuchelheim (DE); Fraunhofer-Gesellschaft zur Förderung der angewandten Forschung e.V., 80686 München (DE)
(72) Erfinder: SIEGEL, Stefan, 01189 Dresden (DE); BODEN, Gottfried, 01257 Dresden (DE); PETASCH, Uwe, 01920 Panschwitz (DE); THOLE, Volker, 38102 Braunschweig (DE); WEISS, Roland, 45625 Hüttenberg (DE); SCHEIBEL, Thorsten, 61231 Bad Nauheim (DE); HENRICH, Martin, 35582 Wetzlar (DE); EBERT, Marco, 35083 Wetter (DE); KÜHN, Martin, 35452 Heuchelheim (DE); LAUER, Andreas, 35274 Kirchhain (DE); NAUDITT, Gotthard, 35440 Linden (DE)
(74) Vertreter: Stoffregen, Hans-Herbert
(86) Internationale Anmeldenummer: PCT/EP2002/014152
(87) Internationale Veröffentlichungsnummer: WO 2003/050058

(56) Entgegenhaltungen:
- EP-A- 1 219 578
- DE-A- 19 947 731
- GB-A- 1 346 735
- IIZUKA H ET AL: "MECHANICAL PROPERTIES OF WOODCERAMICS: A POROUS CARBON MATERIAL" JOURNAL OF POROUS MATERIALS, KLUWER ACADEMIC PUBLISHERS, DORDRECHT, NL, Bd. 6, Nr. 3, Mai 1999 (1999-05), Seiten 175-184, XP000849138 ISSN: 1380-2224
- DATABASE WPI Section Ch, Week 199010 Derwent Publications Ltd., London, GB; Class A35, AN 1990-072436 XP002152915 -& JP 02 026817 A (SHOWA DENKO KK), 29. Januar 1990 (1990-01-29)
- GREIL P: "Biomorphous ceramics from lignocellulosics" JOURNAL OF THE EUROPEAN CERAMIC SOCIETY, ELSEVIER SCIENCE PUBLISHERS, BARKING, ESSEX, GB, Bd. 21, Nr. 2, Februar 2001 (2001-02), Seiten 105-118, XP004227988 ISSN: 0955-2219

## Beschreibung

Die Erfindung bezieht sich auf ein Verfahren zur Herstellung eines Keramikbauteils auf der Basis von Kohlenstoff unter Verwendung eines cellulosehaltigen, insbesondere lignocellulosehaltigen Halbzeugformteils, das in nichtoxidierender Gasatmosphäre pyrolysiert wird.

Großflächige, insbesondere Wandstärken zwischen 0,2 und 20 mm aufweisende Keramikbauteile aus Kohlenstoff bzw. Siliciumcarbid werden z. B. als Brenn- oder Sinterunterlagen, als Trag und Chargiersysteme oder als Leichtbaukomponenten in Öfen und Wärmetauschern eingesetzt. Insbesondere aufgrund ihrer niedrigen Dichte, ihrer ausreichenden Festigkeit und ihrer guten Hochtemperaturstabilität bei mehr als 2000 °C in nichtoxidierender Atmosphäre hat sich der Einsatz von Kohlenstoffwerkstoffen z. B. im Ofenbau bewährt. Sollen noch höhere Festigkeits- und Steifigkeitsforderungen erfüllt werden, gelangen Siliciumcarbidwerkstoffe zum Einsatz.

Um großflächige Kohlenstoffteile und Erzeugnisse herzustellen, können verschiedene Verfahren der Pulvertechnologie zur Anwendung gelangen. Dabei wird Kohlenstoff- und/oder Graphitpulver mit einem hochkohlenstoffhaltigen Binder wie Pech, Harz oder cellulosehaltigen Lösungen vermischt, in Formen verpresst und durch eine Wärmebehandlung ausgehärtet Gegebenenfalls kann eine weitere mechanische und chemische Endbehandlung zur Oberflächenvergütung erfolgen. Nachteil dieser vorzugsweise für eine Serienfertigung von großflächigen dünnwandigen Kohlenstofferzeugnissen angewandten Technologie ist vor allem der hohe apparative Aufwand, der zur Herstellung guter und reproduzierbarer Pulver- und Binderqualitäten erforderlich ist. Außerdem liegen die Ausschussraten relativ hoch, wodurch die teilweise hohen Herstellungskosten verursacht werden.

Zur Herstellung großflächiger Kohlenstofferzeugnisse gelangen auch CFC (kohlenstofffaserverstärkte Kohlenstoff-Werkstoffe zum Einsatz. Zur Herstellung dieser werden Kohlenstofffasern in Form von Vliesen, Matten oder Gelegen mit Harzen wie Phenolharzen zum Teil mehrfach getränkt und anschließend pyrolysiert. Diese Werkstoffe verbinden die Eigenschaften von polykristallinem Kohlenstoff mit den Vorteilen hochfester Kohlenstofffasern und stellen Verbundwerkstoffe dar, die eine hohe Festigkeit, einen hohen Risswiderstand, eine hohe Thermoschockbeständigkeit, eine geringe Dichte und eine gute mechanische Bearbeitbarkeit aufweisen (M. Leuchs, J. Spörer: "Langfaserverstärkte Keramik - eine neue Werkstoffklasse", Keram. Zeitschrift 49, 18-22 (1997)). Aufgrund der hohen Herstellungskosten ist jedoch ein umfassender Einsatz nicht gegeben.

Die DE 198 23 507 bezieht sich auf ein Verfahren zur Herstellung von Formkörpern auf der Basis von Kohlenstoff, Carbiden und/oder Carbonitriden. Dabei werden biogene Stoffe verwendet, die durch Carbonisieren in ein hauptsächlich kohlenstoffhaltiges Produkt konvertiert werden, um anschließend zu hochkohlenstoffhaltigen Formkörpern verarbeitet zu werden. Als biogene Ausgangsmaterialien werden Faserverbunde in Form von Vliesen, Matten oder Geweben, also Langfaserverbunde sowie großflächige dünnwandige Flächengebilde vorgeschlagen. Entsprechende technische Flächengebilde unterliegen in ihrer Nutzung als Kohlenstoffwerkstoffe mit mechanischer Funktion einer entscheidenden Einschränkung, da die erreichbaren Kohlenstoffdichten für die meisten Anwendungen zu gering sind, so dass die Festigkeiten nicht die Anforderungen an mechanisch hochbeanspruchbare Bauteile erfüllen. Auch als Kohlenstoff-Vorlage für eine Reaktionssilicierung ist ein solches Produkt nur bedingt verwendbar, da ein hoher Anteil freien Siliciums im Endprodukt entscheidende Einschränkungen im Korrosions- und Hochtemperaturverhalten bewirkt.

Die Verwendung holzartiger Produkte als Ausgangsmaterialien für kostengünstige SiC-Keramiken, die über einen sogenannten "Biocarbon-Vorkörper" durch Flüssigphasensilicierung gebildet werden, ist aus "Krenkel: Biomorphe SiC-Keramiken aus technischen Hölzem", Symposium "Verbundwerkstoffe und Werkstoffverbunde", Herausg. K. Schulte, K. Kainer, Wiley-Verlag Chemie Weinheim 1999 sowie "Low cost ceramics from wooden products", Materials Week, München 23-28.9.2000" bekannt. Experimentell wurden dabei vor allem Kohlenstoffkörper aus pyrolysierten Furniersperrhölzern siliciert und in einen C/SiC/Si-Werkstoff überführt.

Aus der DE 199 47 731 A1 ist ein Verfahren zur Herstellung eines Bauteils aus SiC-Keramik bekannt. Dabei wird aus einem cellulosehaltigen Ausgangskörper durch Pyrolyse und nachfolgende Infiltration mit Silicium ein keramisches Bauteil hergestellt. Der Ausgangskörper besteht aus einem technischen Halbzeug, das aus cellulosehaltigem Material in Form von Spänen und/oder aus einzelnen Lagen flächiger Holzteile gebildet wird. Dabei wird das Gefüge des Halbzeuges durch verschiedene Verhältnisse von cellulosehaltigem Material und Bindemittel eingestellt, wobei der Bindemittelgehalt mehr als 5 % beträgt. Durch die Lagenbildung und Wahl des cellulosehaltigen Materials entsteht ein Halbzeug mit einem hohen Anteil an translaminaren Porenl:anälen, die eine Infiltration mit flüssigem Silicium erleichtern. Dieser Vorgang wird bei einem schichtweise aufgebauten Halbzeug noch durch Rissbildung bei der Pyrolyse unterstützt. Durch dieses inhomogene, stark poröse Gefüge entsteht aber eine nur für sehr eingeschränkte SiSiC-Sondenanwendungen nutzbare Kohlenstoff-Vorlage. Der resultierende hohe Anteil an freiem Si im Endprodukt schränkt sowohl die mechanischen Eigenschaften als auch das Korrosions- und Hochtemperaturverhalten entscheidend ein.

Aus der JP 2001-048648 ist es bekannt, ein Bauteil auf der Basis von Kohlenstoff unter Verwendung eines lignocellulosehaltigen Halbzeugformteils herzustellen, das unter Sauerstoffausschluss pyrolysiert wird. Die Kohlenstoff-Formteile weisen geringe mechanische Festigkeit auf.

Die WO 01/64602 bezieht sich auf ein Keramikbauteil, das auf der Basis eines lignocellulosehaltigen Halbzeugformteils hergestellt worden ist. Aufgrund der Materialzusammensetzung und Verarbeitungstechnologie ergeben sich eine geringe Werkstoffdichte sowie Gefüge- bzw. Dichte-Inhomogenitäten.

Aus der DE 39 22 539 C2 ist ein Verfahren zur Herstellung von hochpräzisen Heizelementen aus CFC bekannt, das als Ausgangskörper ein gepresstes Kohlenstofffasergewebe oder gewickelte Kohlenstoffmonofilamentfasern vorschlägt. Dabei besteht die Möglichkeit, den sodann pyrolysierten Körper zu silicieren.

Die JP 2026817 A bezieht sich auf die Herstellung von Carbonisat-Platten auf Holzfaser-Basis. Ein Hinweis, ein Silicieren vorzunehmen, findet sich nicht. Auch ist dem Dokument nicht zu entnehmen, dass Halbzeugformteile mit homogener Dichteverteilung bzw. isotropen oder im Wesentlichen isotropen Eigenschaften zum Einsatz gelangen.

Die GB-A 1 346 735 bezieht sich auf Kohlenstoffbauteile nachimprägnierten zellulosehaltigen dünnen Halbzeugen. Weder ein Silicieren ist angesprochen, noch sind Hinweise auf eine homogene Dichteverteilung bzw. isotrope Eigenschaften gegeben.

Aus der Literaturstelle Greil, P: "Biomorphous ceramics from lignocellulosics", Journal of the European Ceramic Society, Elsevier Science Publishers, Barking. Essex, GB, Bd. 21, Nr. 2, Februar 2001 (2001-02), Seiten 105-118, ist ein Keramikbauteil auf der Basis eines lignolcellulosehaltigen Halbzeugformteils bekannt. Ausgangspunkt sind dabei monolithische natürliche Hölzer und ligninfreie Cellulose-Prekursoren. Zwar werden auch Faserplatten angesprochen, ohne dass jedoch Hinweise für technische Halbzeuge optimierter Dichteverteilung gegeben sind. Insbesondere ergibt sich kein Hinweis auf eine homogene Dichteverteilung entlang der Raumdiagonalen bzw. hinsichtlich isotroper oder im Wesentlichen isotroper Eigenschaften. Hinweise auf richtungsunabhängige mechanische und thermische Eigenschaften ergeben sich nicht. Auch ist ein Einsatz unter betonter mechanischer Beanspruchung zum Beispiel als Auskleidung für Öfen, in Wärmetauschern, als Brenn- und Sinterunterlagen oder als Trage- und Chargiersysteme nicht angedacht. Vielmehr sind Hauptanwendungsgebiete der nach Greil herzustellenden hochporösen Keramiken Filter und Träger für Kanalysatoren.

Wesentlicher Nachteil der dem Stand der Technik zu entnehmenden Verfahren ist es, dass die pulvertechnologisch bzw. über einen Faserwickelprozess hergestellten großflächigen Erzeugnisse aufwendig und teuer sind, da spezielle Presswerkzeuge bzw Faserwickelaggregate benötigt werden. Nachteilig ist des Weiteren, dass für spezielle Anwendungszwecke benötigte Strukturierungen wie Bohrungen, Aussparungen oder ähnliches entweder mit extrem hohen Mehrkosten in das Presswerkzeug integriert oder nachträglich in das starre sowie teilweise brüchige Faserverbund-Kohlenstofferzeugnis eingebracht werden müssen.

Aus Spänen oder Furniersperrhölzern hergestellte Kohlenstoff- bzw. SiC-Werkstoffe sind inhomogen. Holz ist durch eine ausgeprägte Anisotropie gekennzeichnet, die auch bei makroskopischen Holzteilen wie Spänen oder Furnieren erhalten bleibt. Selbst bei einer entsprechend angepassten Werkstoffbildung wird die rohstoffbedingte Anisotropie auf den Verbundwerkstoff übertragen. Somit sind mechanische und thermische Eigenschaften des Werkstoffes stark richtungsabhängig.

Der vorliegenden Erfindung liegt das Problem zu Grunde, ein Verfahren der eingangs genannten Art so zu gestalten bzw. weiterzubilden, dass homogene großflächige Keramikbauteile als Massenprodukt herstellbar sind, die weitgehend richtungsunabhängige mechanische und thermische Eigenschaften aufweisen. Auch sollen verfahrensmäßige Vereinfachungen gegeben scin. Schließlich sollen problemlos geometrische Strukturen in den Bauteilen ausgebildet werden können.

Erfindungsgemäß wird das Problem zum einen dadurch gelöst, dass zur Herstellung des Keramikbauteils eine hochdichte (HDF)-Faserplatte als Halbzeugformteil mit homogener Verteilung der Dichte über deren Plattendiagonalen mit einer Dichteabweichung Δρ mit Δρ ≤ 20 kg/m³ verwendet wird, dass die hochdichte Faserplatte verdichtet und anschließend pyrolisiert wird derart, dass das Halbzeugformteil eine Dichte zwischen in etwa 700 kg/m³ und 900 kg/m³ aufweist, und dass das Halbzeugformteil nach dem Pyrolisieren siliziert wird.

Außerdem wird das Problem jedoch dadurch gelöst, dass als Halbzeugformteil ein aus cellulose- und/oder lignoccellulosehaltigen Partikeln bestehendes plattenförmiges Formteil in Form einer hochdichten (HDF)-Faserplatte verwendet wird, wobei die Partikel statistisch derart in dem Halbzeugformteil verteilt sind, dass das Halbzeugformteil isotrope Eigenschaft aufweist, dass die hochdichte Faserplatte verdichtet und anschließend pyrolisiert wird derart, dass das Halbzeugformteil eine Dichte zwischen in etwa 700 kg/m³ und 900 kg/m³ aufweist, und dass das Halbzeugformteil nach der Pyrolyse siliziert wird derart, dass das Keramikbauteil eine SiSiC Keramikbauteil mit definiertem freien C-Anteil ist.

Der besondere Vorteil der erfindungsgemäßen faserhaltigen lignocellulosehaltigen Ausgangswerkstoffe liegt in der hohen Isotropie.

Insbesondere besteht das Halbzeugformteil aus regellos, d. h. statistisch im Raum gestreuten vorzugsweise polymergebundenen Partikeln, die zu isotropen Eigenschaften des Zu pyrolysierenden Formkörpers führen. Bei den Partikeln kann es sich um Fasern handeln, aber auch um flächige Partikel, die ihrerseits in von dem jeweiligen Partikel aufgespannter Ebene gleiche oder im Wesentlichen gleiche Erstreckungen aufweisen. Das Formteil ist dabei so hergestellt, dass es für eine nachfolgende Silicierung geeignet ist derart, dass ein SiSiC-Keramikbauteil mit definiertem freien C-Anteil herstellbar ist.

Bevorzugterweise ist vorgesehen, dass als Halbzeugformteil eine Faserplatte einer Dichte mit 800 ≤ ρ ≤ 1100 kg/m³ und homogener Verteilung der Dichte entlang deren Raumdiagonale mit insbesondere Δρ ≤10 kg/m³ verwendet wird.

Insbesondere erfolgt eine Pyrolyse unter Luftausschluss bei einer Temperatur T mit 400 °C ≤ T ≤ 2300°C, insbesondere T ≤ 1600 °C, wobei insbesondere die Aufheizgeschwindigkeit im Temperaturbereich zwischen 250 °C und 550 °C zwischen 0.1 k/min und 0,5 K/min, insbesondere zwischen 0,3 und 0,5 K/min beträgt. Im Reaktionsraum entstehende gasförmige und flüchtige Verbindungen sollten des Weiteren mit einem Strom eines nichtoxidierenden Gases bzw. Inertgases wie Stickstoff oder Argon entfernt werden.

Zur Herstellung großflächiger Keramikbauteile aus Kohlenstoff oder Siliciumcarbid sollten insbesondere faser-, Span- und/oder strandhaltige lignocellulosehaltige Platten einer Dicke D mit 1 mm ≤ D ≤ 50 mm und/oder eine Dichte ρ mit ρ ≥ 500 kg/m³ verwendet werden. Bevorzugterweise sollte die Dicke D betragen 2 mm ≤ D ≤ 20 mm und/oder die Dichte ρ ≥ 650 kg/m³.

Insbesondere wird zur Herstellung einer Faserplatte als das Halbzeugformteil ein Gemisch aus Bindemittel und Fasern in einem Heißpressvorgang geformt. Durch die Verwendung einer Heißpresse kann ein erheblich kürzerer Presszyklus gewählt werden als in einem Kaltpressverfahren, so dass sich wirtschaftliche Vorteile ergeben. Die gewünschte Struktur und das gewünschte Gefüge werden dabei gezielt durch den Verdichtungsgrad und durch die Wahl verschiedener Pressphasen eingestellt. Die Verdichtung kann aus mehreren Öffnungs- und Schließvorgängen mit nachfolgender Haltephase bestehen, wobei zumindest ein in erster Verdichtungsphase aufzubringender spezifischer Pressdruck P₁ betragen sollte: P₁ ≥ 5 N/mm². Genutzt wird hierbei die Eigenschaft von Holz, das unter Wärme- und Dampfeinwirkung plastifiziert. In der Haltephase sollte der Pressvorgang bis zur Erhärtung des Bindemittels aufrechterhalten bleiben. Allerdings kann der Pressdruck entsprechend des erreichten Plastifizierungsgrades durch Regelsysteme abgesenkt werden. Hierdurch wird sichergestellt, dass zwischen den Fasern gebildete Verbindungen nicht zerstört werden. Somit werden Risse im Halbzeugformteil vermieden und schädliche Störungen im Werkstoffkontinuum ausgeschlossen.

Entsprechend hergestellte Platten sind selbst bei Dichten von weniger als 700 kg/m³ formstabil und selbsttragend. Entsprechende Ergebnisse erzielt man nicht nur mit Fasern, sondern auch mit Spänen oder Strands. Werden anstelle von Fasern Strands mit Schlankheitsgraden von mehr als 80 eingesetzt und bei der Vliesbildung auf eine Richtungsorientierung verzichtet, so entstehen Platten mit einer ausgesprochenen Isotropie.

Für bestimmte Einsatzbereiche kann die bei OSB (Oriented Strand Board), PSL (Parallel Strand Lumber), LSL (Laminated Strand Lumber), VSL (Veneered Strand Lumber) oder Uniformspanplatte vorhandene gewisse Anisotropie von Vorteil sein. Unabhängig hiervon sollte jedoch das Pressverfahren entsprechend dem zur Herstellung der erfindungsgemäßen Halbzeugformteile aus Fasern durchgeführt worden.

Losgelöst davon, ob die Platte als das Halbzeugformteil insbesondere in Form einer Faserplatte eine flächige Erstreckung im Bereich vorzugsweise zwischen 0,1 m² bis 3 m² aufweist, die den meisten Anwendungsfällen genügt, ist in besonders hervorzuhebender Weiterbildung der Erfindung vorgesehen, dass eine Bearbeitung der Platte vor deren Pyrolyse erfolgt, um eine gewünschte Struktur im fertigen Bauteil zu erzielen. Die Bearbeitung kann dabei spanend und nichtspanend erfolgen. Auch können insbesondere während des Pressens gewünschte Formgebungen erfolgen. Dabei besteht auch die Möglichkeit, dass die Bearbeitung bzw. Formgebung gleichzeitig für mehrere übereinander liegende Platten erfolgt.

Die bearbeiteten - gegebenenfalls auch unbearbeiteten - Platten als die Halbzeugformteile werden sodann dem Pyrolyseprozess unterzogen, wobei bevorzugterweise Temperaturen zwischen 400 und 2300 °C, insbesondere Temperaturen zwischen 800 und 1600 °C unter Ausschluss von Luft zur Anwendung gelangen, um die Halbzeugformteile in die Kohlenstoffkeramik umzuwandeln.

Die mit dem Pyrolyseprozess verbundene Materialschrumpfung kann dabei für die Gestaltung der Endmaße bereits bei dem Ausgangformhalbzeug berücksichtigt werden. Dabei ist in Betracht zu ziehen, dass die Schrumpfung in Länge und Breite etwa 20 bis 25 % und in Höhe etwa 30 bis 40 % beträgt. Auch die Dichte des Halbzeugformteils verringert sich infolge des Pyrolyseprozesses auf etwa 70 bis 80 % der Ausgangsplattendichte.

Schrumpfungsraten und Dichteänderungen sind insgesamt abhängig von der Art der Platte, von Werkstofftyp, Holzart, Bindemittelart, Bindemittelgehalts, den Pyrolysebedingungen und den geometrischen Abmessungen.

Des Weiteren sicht die erfindungsgemäße Lehre vor, dass die Pyrolyse der Platte derart erfolgt, dass entstehende flüchtige Pyrolyseprodukte wie Wasser, Kohlenmonoxid, Kohlendioxid, aliphatische oder aromatische Kohlenwasserstoffe wie Benzin, Naphtalin bzw. Alkohole, Ketone, Aldehyde ungehindert in das Abgas gelangen können. Hierbei sind entsprechend lange Pyrolysezeiten, die sich im Temperaturbereich zwischen 250 °C und 550 °C ohne Weiteres auf mehrere Tage erstrecken können, sowie Freiräume zwischen den Platten erforderlich, sofern mehrere Platten gleichzeitig pyrolysiert werden. Zur Vereinfachung der Entgasung sieht ein weiterer Vorschlag der Erfindung vor, dass in das Halbzeugformteil ein Zusatzmittel eingebracht wird, das unter Wärmeeinwirkung als Porenbildner wirkt.

Nach erfolgter Pyrolyse erfolgt eine Abkühlung der nunmehr weitgehend aus Kohlenstoff bestehenden Platte unter Inertgasatmosphäre bis auf Raumtemperatur, wodurch eine Selbstentzündung der Kohlenstoffteile vermieden wird.

Ohne die Erfindung zu verlassen, besteht auch die Möglichkeit, entsprechende keramische Bauteile chemisch nachzubehandeln. So können oxidationshemmende Schichten wie Siliciumdioxid, Siliciumcarbid oder Silikate aufgebracht werden. Auch eine Infiltration mit flüssigem oder gasförmigem Silicium ist möglich, wodurch SiC oder Si/SiC/C-Verbundweskstoffe entstehen.

Hochdichte Faserplatten (HDF) einer Dichte ρ mit ρ ≥ 800kg/m³ werden für die Bildung von homogenen Kohlenstoffplatten durch Pyrolyse in Inertgasstrom verwendet. Diese Faserplatten können sowohl Holzfasern als auch Pflanzenfasern als Fasermaterial aufweisen. Als Pflanzenfasern kommen insbesondere Flachs, Hanf, Sisal, Miscanthus oder Nessel in Frage. Nach der Pyrolyse werden Dichten von 700 bis 900 kg/m³ erreicht.

Die entsprechenden durch Pyrolyse hergestellten Keramikbauteile sind formstabil, selbsttragend und gut handhabbar. Ein Stapeln kann ohne Probleme erfolgen. Auch ist ein mechanisches Nachbearbeiten und ein Einbauen in Anlagen möglich. Die Biegebruchfestigkeit entsprechender Kohlenstoffbauteile beläuft sich zwischen 20 bis 50 MPa und die von Siliciumcarbidbauteilen bis zu 350 MPa. Die hergestellten Platten weisen eine gute Homogenität in den mechanischen Eigenschaften wie Dichte und Festigkeit auf, eine Voraussetzung für eine selbsttragende Eigenschaft.

Mit der erfindungsgemäßen Lehre hergestellte Platten können gewünschte flächenmäßige Abmessungen aufweisen. Bevorzugterweise sind Flächen von bis zu 3 m² zu nennen, wobei auch größere Flächen erzielt werden können.

Erfu1dungsgcmäß hergestellte Keramikerzeugnisse können als Auskleidung für Öfen, in Wärmetauschern, als Brenn- und Sinterunterlagen oder als Trage- und Chargiersysteme eingesetzt werden. Andere Verwendungsmöglichkeiten sind Reibelemente und -systeme, Dichtungen und Leichtbausysteme. Auch ein Einsatz als Substratwerkstoff und Prozesshilfsmittel in der Solartechnik ist zu erwähnen.

Die Keramikbauteile sind als Massenprodukte kostengünstig herstellbar. Des Weiteren besteht erwähntermaßen auch die Möglichkeit, die Keramikbauteile mit Silicium mittels Flüssigphasen- bzw. Gasphasensilicierung zu SiC-haltigen Verbunden umzusetzen, um dann so gebildete SiC/C/Si-Produkte gleichfalls als Trage- und Chargiersysteme, Brenn- und Sinterunterlagen zu verwenden. Ein Einsatz für Bremsen, Kupplungen, Reibelemente, Filterelemente, Heizelemente, Schutzpanzerungen o. ä. ist gleichfalls möglich.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus den nachfolgenden näher erläuterten Beispielen.

### Beispiel 1 (Referenzbeispiel)

Eine Mitteldichte Faserplatte (MDF) wurde hergestellt, indem in einer Versuchsanlage, bestehend aus Kocher, Blowline-Beleimung und Rohrtrockner, Holzfasern einer Länge von 2 mm und einer Restfeuchte von 4% mit einem Harnstoff-Formaldehyd-Harz beleimt, getrocknet, anschließend auf eine Dichte von 150 kg/m³ kalt vorverdichtet und danach bei einer Temperatur von 200 °C zur Erhöhung der Dichte und zur Aushärtung des Bindemittels nach einem speziellen Pressregime heißgepresst wurden Die MDF-Platte wies eine Dichte von 800 kg/m³ und eine Dicke von 8 mm auf. Aus dieser MDF-Platte wurde ein Plattenabschnitt von 300 x 300 mm² abgetrennt und dieser einem Pyrolyseprozess bis 1700 °C ausgesetzt. Die Pyrolyse erfolgte in einem Kammerofen unter trockenem Stickstoff mit einer Strömungsgeschwindigkeit von 15 l/min, wobei die flüchtigen Pyrolyseprodukte wie Methan, Wasserstoff, niedere Kohlenwasserstoffe und Kohlenmonoxid in einer Nachverbrennungseinrichtung verbrannt wurden. Die schwerer flüchtigen Pyrolyseprodukte wie höhere aliphatische und aromatische Kohlenwasserstoffe wurden in einem mit Öl gefüllten Separator abgetrennt. Die Pyrolysezeit betrug insgesamt 38 Stunden, wobei die Aufheizgeschwindigkeit im Bereich des maximalen Masseverlustes 30 Kh⁻¹ betrug.

Die pyrolysierte Faserplatte bestand aus 98,8 % Kohlenstoff und wies eine Dichte von 630 kg/m³ und eine offene Porösität von 57 % auf Die Schwindung der Platte betrug in Länge und Breite 23,2 % und in der Höhe 36,5 %. Die Massenabnahme gegenüber der Ausgangs-Faserplatte betrug 73,5 %. Die auf diese Weise erhaltene Kohlenstoffplatte einer Abmessung von 230 x 230 x 5,1 mm³ wies keine Verzugserscheinungen auf, war vollständig eben sowie selbsttragend. Sie ließ sich mechanisch gut bearbeiten (Bohren, Schneiden, Fräsen), ohne dass Ausbrüche und Abplatzungen entstanden. Die Festigkeit von aus der Kohlenstoffplatte herausgetrennten Proben der Abmessung 10 x 4,5 x 64 mm³ betrug 21 ±3 MPa, gemessen nach der 3-Punkt-Biegemethode (Auflage 50mm).

### Beispiel 2

Eine hochdichte Faserplatte (HDF) wurde analog dem Beispiel 1 hergestellt, wobei die Temperatur bei der Heißverpressung 210 °C betrug. Die HDF-Platte wies eine Dichte von 1000 kg/m³ und eine Dicke von 8 mm auf. Aus dieser HDF-Platte wurde eine Platte von 300 x 300 mm² abgetrennt und einem Pyrolyseprozess bis 1700 °C gemäß Beispiel 1 unterzogen. Die pyrolysierte Holzfaserplatte bestand aus 99,1 % Kohlenstoff wies eine Dichte von 810 kg/m³ und eine offene Porösität von 43 % auf. Die Schwindung der Platte betrug in Länge und Breite 23,4 % und in der Höhe 35,8 %. Die Massenabnahme gegenüber der Ausgangsplatte betrug 70 %.

Die erhaltene Kohlenstoffplatte zeigte keine Verzugserscheinungen, war eben und selbsttragend und ließ sich mechanisch gut und ohne Ausbrüche bearbeiten. Die Festigkeit aus der Kohlenstoffplatte herausgearbeiteter Proben der Abmessung 10 x 4,5 x 64 mm³ betrug 33 ± 3 MPa gemessen nach der 3-Punkt-Biegemethode (Auflage 50 mm).

Aus einer parallel gefertigten Kohlenstoffprobe derselben Platte wurde eine Siliciumcarbidprobe hergestellt, indem nach dem Dochtverfahren eine Flüssigsilicierung bei einer Temperatur von 1600 °C durchgeführt wurde. Diese SiC-Probe wies die gleichen äußeren Abmessungen wie die Kohlenstoffprobe auf, zeigte eine Dichte von 2,84 g/cm³ und keine offene Porösität. Die Biegebruchfestigkeit betrug 268 ± 40 MPa, gemessen nach der 4-Punkt-Biegemethode. Der E-Modul betrug 270 ± 10 GPa.

### Beispiel 3 (Referenzbeispiel)

Eine OSB (Oriented Strand Board)-Platte wurde hergestellt, indem Kiefernholz mittels eines Scheibenzerspaners in übliche OSB-Strands einer Abmessung von 60 bis 150 mm in der Länge, 15 bis 30 mm in der Breite und 0,4 bis 1 mm in der Dicke verarbeitet und die Strands mit einem Polyphenylmethandiisocyanat-Harz beleimt, danach kalt vorverdichtet und anschließend bei 200 °C verdichtet wurden. Die Dichte des OSB-Platte betrug 650 kg/m³. Die Dicke der Platte betrug 18 mm. Aus der OSB-Platte wurde ein Abschnitt von 300 x 300 mm² abgetrennt und dieser einem Pyrolyseprozess bis 1700 °C gemäß Beispiel 1 ausgesetzt: Die pyrolysierte OSB-Platte bestand zu 99,4 % aus Kohlenstoff und wies eine Dichte von 480 kg/m³ auf. Der Plattenabschnitt wies nach der Pyrolyse die Abmessungen 230 x 230 x 11,7 mm³ auf, zeigte keine Verzugserscheinungen oder Aufplatzungen und war selbsttragend. Er ließ sich ohne Ausbrüche mechanisch bearbeiten. Der Masseverlust der erhaltenen Kohlenstoffplatte betrug gegenüber dem Plattenteil vor der Pyrolyse 72%.

## Patentansprüche

1. Verfahren zur Herstellung eines Keramikbauteils auf der Basis von Kohlenstoff unter Verwendung eines cellulosehaltigen, insbesondere lignocellulosehaltigen Halbzeugformteils, das in nichtoxidierender Gasatmosphäre pyrolysiert wird,
**dadurch gekennzeichnet,**
**dass** zur Herstellung des Keramikbauteils eine hochdichte (HDF)-Faserplatte als Halbzeugformteil mit homogener Verteilung der Dichte über deren Plattendiagonalen mit einer Dichteabweichung Δρ mit Δρ ≤ 20 kg/m³ verwendet wird, dass die hochdichte Faserplatte verdichtet und anschließend pyrolisiert wird derart, dass das Halbzeugformteil eine Dichte zwischen in etwa 700 kg/m³ und 900 kg/m³ aufweist, und dass das Halbzeugformteil nach dem Pyrolisieren siliziert wird.

2. Verfahren zur Herstellung eines Keramikbauteils auf der Basis von Kohlenstoff unter Verwendung eines cellulosehaltigen, insbesondere lignocellulosehaltigen Halbzeugformteils, das in nichtoxidierender Gasatmosphäre pyrolysiert wird,
**dadurch gekennzeichnet,**
**dass** als Halbzeugformteil ein aus cellulose- und/oder lignocellulosehaltigen Partikeln bestehendes plattenförmiges Formteil in Form einer hochdichten (HDF)-Faserplatte verwendet wird, wobei die Partikel statistisch derart in dem Halbzeugformteil verteilt sind, dass das Halbzeugformteil isotrope Eigenschaft aufweist, dass die hochdichte Faserplatte verdichtet und anschließend pyrolisiert wird derart, dass das Halbzeugformteil eine Dichte zwischen in etwa 700 kg/m³ und 900 kg/m³ aufweist, und dass das Halbzeugformteil nach der Pyrolyse siliziert wird derart, dass das Keramikbauteil eine SiSiC Keramikbauteil mit definiertem freien C-Anteil ist.

3. Verfahren nach Anspruch 1 oder 2,
**dadurch gekennzeichnet,**
**dass** als Faserplatte ein ebenes oder ein dreidimensional geformtes Formteil verwendet wird.

4. Verfahren nach Anspruch 1 oder 2,
**dadurch gekennzeichnet,**
**dass** als Faserplatte ein polymergebundenes Formteil verwendet wird.

5. Verfahren nach zumindest einem der vorhergehenden Ansprüche,
**dadurch gekennzeichnet,**
**dass** als Faserplatte eine solche mit isotropen Eigenschaften, insbesondere mit einer homogenen Verteilung der Dichte über deren Plattendiagonale mit einer Dichteabweichung Δρ mit vorzugsweise Δρ ≤ 10 kg/m³ verwendet wird.

6. Verfahren nach zumindest einem der vorhergehenden Ansprüche,
**dadurch gekennzeichnet,**
**dass** die Faserplatte unter Luftausschluss bei einer Temperatur T mit 400 °C ≤ T ≤ 2300 °C, insbesondere 800 °C ≤ T ≤ 1600 °C pyrolysiert wird.

7. Verfahren nach zumindest einem der vorhergehenden Ansprüche,
**dadurch gekennzeichnet,**
**dass** die Faserplatte im Temperaturbereich von in etwa 250 °C bis in etwa 550 °C mit einer Geschwindigkeit von in etwa 0,1 K/min bis 0,5 K/min aufgeheizt wird.

8. Verfahren nach zumindest einem der vorhergehenden Ansprüche,
**dadurch gekennzeichnet,**
**dass** im Reaktionsraum beim Pyrolysieren freigesetzte gasförmige flüchtige Verbindungen mit einem Inertgasstrom wie Stickstoff oder Argon aus dem Reaktionsraum entfernt werden.

9. Verfahren nach zumindest einem der vorhergehenden Ansprüche,
**dadurch gekennzeichnet,**
**dass** eine Faserplatte einer Dicke D mit 1 mm ≤ D ≤ 50 mm, insbesondere 2 mm ≤ D ≤ 20 mm verwendet wird.

10. Verfahren nach zumindest einem der vorhergehenden Ansprüche,
**dadurch gekennzeichnet,**
**dass** Ausgangsmischung für die Faserplatte porenbildende Zusatzstoffe beigegeben werden.

11. Verfahren nach zumindest einem der vorhergehenden Ansprüche,
**dadurch gekennzeichnet,**
**dass** die Faserplatte durch aufeinanderfolgende Pressphasen hergestellt wird.

12. Verfahren nach zumindest einem der vorhergehenden Ansprüche,
**dadurch gekennzeichnet,**
**dass** die Faserplatte nach der Pyrolyse und/oder nach deren Nachbearbeitung chemisch nachbehandelt wird.

13. Verfahren nach zumindest einem der vorhergehenden Ansprüche,
**dadurch gekennzeichnet,**
**dass** die pyrolysierte Faserplatte mit einer oxidationshemmenden Schicht wie Siliciumdioxid, Siliciumcarbid oder Silikat versehen wird.

14. Verfahren nach zumindest einem der Ansprüche 1 bis 13,
**dadurch gekennzeichnet,**
**dass** die pyrolysierte Faserplatte einer Silicierung wie einer Flüssigphasen- oder Gasphasensilicierung zur Erzielung eines SiSiC-Keramikkörpers mit gewünschtem freien C-Anteil bis nahezu 0 % unterzogen wird.

15. Verfahren nach Anspruch 14,
**dadurch gekennzeichnet,**
**dass** das Silicieren bei einer Temperatur T₂ mit T₂ ≥ 1420 °C durchgeführt wird.

16. Verfahren nach zumindest einem der vorhergehenden Ansprüche,
**dadurch gekennzeichnet,**
**dass** die Faserplatte aus Holzfasern und/oder Pflanzenfasern wie Flachs, Hanf, Sisal, Miscanthus oder Nessel hergestellt wird.

17. Verfahren nach zumindest einem der vorhergehenden Ansprüche,
**dadurch gekennzeichnet,**
**dass** die Faserplatte spanend oder nichtspanend bearbeitet wird.

18. Verfahren nach zumindest einem der vorhergehenden Ansprüche,
**dadurch gekennzeichnet,**
**dass** die Faserplatte vor dem Pyrolysieren dreidimensional geformt wird.

19. Verfahren nach zumindest einem der vorhergehenden Ansprüche,
**dadurch gekennzeichnet,**
**dass** in die Faserplatte vor dem Pyrolysieren Bohrungen, Aussparungen oder Ausfräsungen unter Berücksichtigung des Schwundverhaltens des Halbzeugformteils während des Pyrolysierens eingebracht werden.

20. Verfahren nach zumindest einem der vorhergehenden Ansprüche,
**dadurch gekennzeichnet,**
**dass** zur Herstellung der Faserplatte faserförmige Partikel durch einen Druckaufschluss, durch einen mechanischen Aufschluss, durch einen thermomechanischen Aufschluss oder durch einen chemothermomechanischen Aufschluss gewonnen werden.

21. Verfahren nach zumindest einem der vorhergehenden Ansprüche,
**dadurch gekennzeichnet,**
**dass** zur Herstellung der Faserplatte verwendetem Gemisch isozyanathaltige Klebstoffe beigegeben werden.

22. Verfahren nach zumindest einem der vorhergehenden Ansprüche,
**dadurch gekennzeichnet,**
**dass** die Faserplatte durch Suspendieren von Fasern in Wasser und sodann durch Sedimentation und nachfolgendes Pressen hergestellt wird.

## Claims

1. Method for producing a ceramic component on the basis of carbon, using a cellulose-containing, especially lignocellulose-containing semi-finished molded piece, which is pyrolyzed in a non-oxidizing gas atmosphere,
**characterized in**
**that** for producing the ceramic component a high density (HDF) fiber board is used as the semi-finished molded piece with a homogeneous density distribution across its sheet diagonal line with a density deviation Δρ wherein Δρ ≤ 20 kg/m³, that the high density fiber board is densified and subsequently pyrolyzed such that the semi-finished molded piece has a density of about 700 kg/m³ to 900 kg/m³, and that the semi-finished molded piece is siliconized after pyrolysis.

2. Method for producing a ceramic component on the basis of carbon, using a cellulose-containing, especially lignocellulose-containing semi-finished molded piece, which is pyrolyzed in a non-oxidizing gas atmosphere,
**characterized in**
**that** a sheet-shaped molded piece in form of a high density (HDF) fiber board consisting of cellulose-containing and/or lignocellulose-containing particles is used as the semi-finished molded piece, wherein said particles are distributed from a statistical point of view in the semi-finished molded piece such that the semi-finished molded piece has isotropic properties, that the high density fiber board is densified and subsequently pyrolyzed such that the semi-finished molded piece has a density of about 700 kg/m³ to 900 kg/m³, and that the semi-finished molded piece is siliconized such after pyrolysis that the ceramic component is a SiSiC ceramic component with a defined free C portion.

3. Method according to claim 1 or 2,
**characterized in**
**that** a two- or a three-dimensionally shaped molded piece is used as the fiber board.

4. Method according to claim 1 or 2,
**characterized in**
**that** a polymer-bonded molded piece is used as the fiber board.

5. Method according to at least one of the preceding claims,
**characterized in**
**that** as the fiber plate one is used that has isotropic properties, especially with a homogeneous density distribution across its sheet diagonal line with a density deviation Δρ wherein preferably Δρ ≤ 10 kg/m³.

6. Method according to at least one of the preceding claims,
**characterized in**
**that** the fiber board is pyrolyzed under exclusion of air at a temperature T with 400°C ≤ T ≤ 2300°C, especially 800°C ≤ T ≤ 1600°C.

7. Method according to at least one of the preceding claims,
**characterized in**
**that** the fiber board is heated in the temperature range of about 250°C to about 550°C at a speed of about 0.1 K/min to 0.5 K/min.

8. Method according to at least one of the preceding claims,
**characterized in**
**that** gaseous volatile compounds released in the reaction chamber during pyrolysis are removed from the reaction chamber with an inert gas flow such as nitrogen or argon.

9. Method according to at least one of the preceding claims,
**characterized in**
**that** a fiber board having a thickness D with 1 mm ≤ D ≤ 50 mm, especially 2 mm ≤ D ≤ 20 mm is used.

10. Method according to at least one of the preceding claims,
**characterized in**
**that** pore-forming additives are admixed to starting mixture for the board.

11. Method according to at least one of the preceding claims,
**characterized in**
**that** the fiber board is produced through successive pressing phases.

12. Method according to at least one of the preceding claims,
**characterized in**
**that** the fiber board is chemically post-treated upon pyrolysis and/or after its post-machining.

13. Method according to at least one of the preceding claims,
**characterized in**
**that** the pyrolyzed fiber board is equipped with an oxidation-inhibiting layer such as silicon dioxide, silicon carbide or silicate.

14. Method according to at least one of claims 1 to 13,
**characterized in**
**that** the pyrolyzed fiber board is subjected to a siliconization such as a liquid phase or gas phase siliconization to achieve an SiSiC ceramic body with the desired free C portion of up to nearly 0%.

15. Method according to claim 14,
**characterized in**
**that** the siliconization is conducted at a temperature T₂ with T₂ ≥ 1420°C.

16. Method according to at least one of the preceding claims,
**characterized in**
**that** the fiber board is produced from wood fibers and/or plant fibers such as flax, hemp, sisal, miscanthus or nettle.

17. Method according to at least one of the preceding claims,
**characterized in**
**that** the fiber board is machined in a metal-cutting or non-cutting operation.

18. Method according to at least one of the preceding claims,
**characterized in**
**that** the fiber board is formed three-dimensionally before pyrolysis.

19. Method according to at least one of the preceding claims,
**characterized in**
**that** into the fiber board prior to the pyrolysis bores, recesses or milled slots are incorporated while observing the shrinkage behavior of the semi-finished molded piece during pyrolysis.

20. Method according to at least one of the preceding claims,
**characterized in**
**that** for the production of the fiber board fiber-shaped particles are gained through a pressure fusion, through a mechanical fusion, through a thermo-mechanical fusion or through a chemo-thennomechanical fusion.

21. Method according to at least one of the preceding claims,
**characterized in**
**that** to the mixture used for the production of the fiber board isocyanate-containing adhesives are admixed.

22. Method according to at least one of the preceding claims,
**characterized in**
**that** the fiber board is produced by suspending fibers in water and subsequent sedimentation and pressing.

## Revendications

1. Procédé de fabrication d'un composant céramique à base de carbone en utilisant un demi-produit contenant de la cellulose, en particulier de la lignocellulose, pyrolysé dans une atmosphère gazeuse non oxydante,
**caractérisé en ce que**
pour fabriquer le composant céramique, on utilise un panneau de fibres haute densité (HDF) en tant que demi-produit dont la densité est répartie de façon homogène sur les diagonales du panneau avec un écart de densité Δp inférieur ou égal à 20 kg/m³,
le panneau de fibres haute densité est compressé puis pyrolysé de manière à ce que le demi-produit ait une densité comprise entre environ 700 kg/m³ et 900 kg/m³, et
le demi-produit est silicé après la pyrolyse.

2. Procédé de fabrication d'un composant céramique à base de carbone en utilisant un demi-produit contenant de la cellulose, en particulier de la lignocellulose, pyrolysé dans une atmosphère gazeuse non oxydante,
**caractérisé en ce que**
comme demi-produit on utilise une pièce moulée en forme de panneau de fibres haute densité (HDF) constitué de particules contenant de la cellulose et/ou de la lignocellulose, les particules étant réparties statistiquement dans le demi-produit de manière à ce que celui-ci ait des propriétés isotropes,
le panneau de fibres haute densité est compressé puis pyrolysé de manière à ce que le demi-produit ait une densité comprise entre environ 700 kg/m³ et 900 kg/m³ et
le demi-produit est silicé après la pyrolyse de manière à ce que le composant céramique soit un composant céramique SiSiC renfermant une fraction de C définie librement.

3. Procédé selon la revendication 1 ou la revendication 2,
**caractérisé en ce que**
comme panneau de fibres on utilise une pièce moulée plane ou en trois dimensions.

4. Procédé selon la revendication 1 ou la revendication 2,
**caractérisé en ce qu'**
on utilise comme panneau de fibres une pièce moulée à liaison polymère.

5. Procédé selon au moins l'une des revendications précédentes,
**caractérisé en ce qu'**
on utilise comme panneau de fibres un panneau ayant des propriétés isotropes, en particulier dont la densité est répartie de manière homogène sur les diagonales du panneau avec un écart de densité Δp inférieur ou égal à 10 kg/m³.

6. Procédé selon au moins l'une des revendications précédentes,
**caractérisé en ce qu'**
on pyrolyse le panneau de fibres sous exclusion d'air à une température T de 400°C ≤ T ≤ 2300°C, en particulier de 800°C ≤ T ≤ 1600°C.

7. Procédé selon au moins l'une des revendications précédentes,
**caractérisé en ce qu'**
on chauffe le panneau de fibres dans une plage de température d'approximativement 250°C à approximativement 550°C à une vitesse d'approximativement 0,1 K/min à 0,5 K/min.

8. Procédé selon au moins l'une des revendications précédentes,
**caractérisé en ce qu'**
on élimine de la chambre de réaction les composés volatils gazeux libérés dans celle-ci lors de la pyrolyse avec un flux de gaz inerte comme l'azote ou l'argon.

9. Procédé selon au moins l'une des revendications précédentes,
**caractérisé en ce qu'**
on utilise un panneau de fibres d'une épaisseur D de 1 mm ≤ D ≤ 50 mm, en particulier de 2 mm ≤ D ≤ 20 mm.

10. Procédé selon au moins l'une des revendications précédentes,
**caractérisé en ce qu'**
on ajoute au mélange de départ pour le panneau de fibres des additifs porogènes.

11. Procédé selon au moins l'une des revendications précédentes,
**caractérisé en ce qu'**
on fabrique le panneau de fibres par phases de pressage successives.

12. Procédé selon au moins l'une des revendications précédentes,
**caractérisé en ce qu'**
on retraite chimiquement le panneau de fibres après la pyrolyse et/ou après la reprise de celui-ci.

13. Procédé selon au moins l'une des revendications précédentes,
**caractérisé en ce qu'**
on dote le panneau de fibres pyrolysé d'une couche antioxydante comme le dioxyde de silicium, le carbure de silicium ou le silicate.

14. Procédé selon au moins l'une des revendications 1 à 13,
**caractérisé en ce qu'**
on soumet le panneau de fibres pyrolysé à une silicatisation telle qu'une silicatisation en phase liquide ou gazeuse pour obtenir un corps céramique SiSiC ayant la fraction de C libre souhaitée jusqu'à presque 0 %.

15. Procédé selon la revendication 14,
**caractérisé en qu'**
on procède à la silicatisation à une température T₂ supérieure ou égale à 1420°C.

16. Procédé selon au moins l'une des revendications précédentes,
**caractérisé en ce qu'**
on fabrique le panneau de fibres à partir de fibres de bois et/ou de fibres végétales comme le lin, le chanvre, le sisal, le miscanthus ou les orties.

17. Procédé selon au moins l'une des revendications précédentes,
**caractérisé en ce qu'**
on usine le panneau de fibres avec ou sans enlèvement de copeaux.

18. Procédé selon au moins l'une des revendications précédentes,
**caractérisé en ce qu'**
on façonne le panneau de fibres en trois dimensions avant la pyrolyse.

19. Procédé selon au moins l'une des revendications précédentes,
**caractérisé en ce que**
dans le panneau de fibres, avant la pyrolyse, on pratique, des alésages, des évidements ou des fraisages en tenant compte du retrait du demi-produit lors de la pyrolyse.

20. Procédé selon au moins l'une des revendications précédentes,
**caractérisé en ce que**
pour fabriquer le panneau de fibres, on obtient les particules fibreuses par réduction sous pression, réduction mécanique, réduction thermomécanique ou réduction chimique et thermomécanique.

21. Procédé selon au moins l'une des revendications précédentes,
**caractérisé en ce qu'**
on ajoute des colles contenant de l'isocyanate au mélange utilisé pour fabriquer le panneau de fibres.

22. Procédé selon au moins l'une des revendications précédentes,
**caractérisé en ce qu'**
on fabrique le panneau de fibres en mettant en suspension les fibres dans de l'eau puis en sédimentant et enfin en pressant.
